# EUROPEAN PATENT APPLICATION

(11) **EP 0 780 592 A2**
(43) Date of publication of application: **25.06.1997**
(21) Application number: 96120253.8
(22) Date of filing: 17.12.1996
(51) Int. Cl.: F16F 13/16, B60K 5/12

(54) **Hanging-type hydraulic mount**

(30) Priority: 18.12.1995 JP 328717/95
(71) Applicant: TOKAI RUBBER INDUSTRIES, LTD., Komaki-shi Aichi-ken (JP)
(72) Inventor: Tanahashi, Hiroaki, c/o Tokai rubber Ind.,Ltd, Komaki-shi, Aichi-ken (JP); Tsukamoto, Takanori, Toyota-shi, Aichi-ken (JP)
(74) Representative: Tiedtke, Harro, Dipl.-Ing.

(57) **Abstract**

A hanging-type hydraulic mount includes a tube-shaped first supporter fitting, a rod-shaped second supporter fitting disposed in the first supporter fitting, a rubber-elastic member disposed between the first supporter fitting and the second supporter fitting, a first bracket connected to the bottom end of the first supporter fitting, a second bracket having a connector block connected to the leading end of the second supporter fitting, and a rubber stopper installed onto the connector block of the second bracket. The rubber stopper has an assembly opening formed in one of the opposite sides, and having a size smaller than the cross-section of the connector block. The assembly opening is expanded elastically to accommodate the connector block in the rubber stopper. The rubber stopper thus covers the connector block. Hence, when installing the rubber stopper onto the connector block, it is unnecessary to carry out the vulcanization-adhesion, and the pretreatments associated therewith, which have been required conventionally.

## Description

### BACKGROUND OF THE INVENTION

### Field of the Invention

The present invention relates to a hanging-type hydraulic mount which is applied, for instance, to an automobile engine mount, etc.

### Description of the Related Art

A hanging-type hydraulic mount has been known, and supports a power unit (i.e., a member to be supported), or the like, with respect to a vehicle body frame (i.e., a supporting member), or the like, in a vibration insulating manner. For example, a conventional hydraulic mount includes a tube-shaped first supporter fitting, a rod-shaped second supporter fitting, a rubber-elastic member, a first bracket, a second bracket, and a rubber stopper. The first supporter fitting has a hydraulic chamber formed therein and opposite ends, and one of the opposite ends has an opening. The second supporter is disposed coaxially in the first supporter fitting away therefrom by a predetermined interval. Further, the second supporter fitting has a leading end and a trailing end, and the leading end projects from the opening of the first supporter fitting. The rubber-elastic member is disposed between the first supporter fitting and the second supporter fitting, and encloses the hydraulic chamber of the first supporter fitting. The first bracket is to be installed to a mounting member. Further, the first bracket is connected to the one of the opposite ends of the first supporter fitting, and has a space therein. The space accommodates the projecting leading end of the second supporter fitting therein. The second bracket is to be installed to another mounting member. Further, the second bracket is formed by casting, and has a connector block. The connector block is connected to the projecting leading end of the second supporter fitting, and is disposed in the space of the first bracket. The rubber stopper is installed onto the connector block of the second bracket.

In the conventional hanging-type hydraulic mount, the rubber stopper is installed onto the connector block of the second bracket in the following manner: a metal plate having a substantially letter U-shaped cross-section, which conforms to a superficial configuration of the connector block, is prepared in advance. The rubber stopper is then adhered on an outer periphery of the metal plate by vulcanization, and the connector block is press-fitted into the metal plate with the rubber stopper adhered. Alternatively, the rubber stopper is directly installed onto the connector block by vulcanization-adhesion.

When press-fitting the connector block into the metal plate with the rubber stopper adhered, many man-hour requirements are needed to complete the processing. For instance, it is necessary for the preparation of the metal plate to press a metal workpiece to give it a predetermined shape. Thereafter, it is further necessary to wash and grind the resulting metal plate, and to apply an adhesive to it. Moreover, even after the rubber stopper is adhered to the metal plate by vulcanization, it is furthermore necessary to finish and paint the metal plate. In addition, it is necessary to carry out a surface treatment, such as machining, or the like, onto a surface of the connector block to be press-fitted, because the connector block of the second bracket is formed by casting.

When the rubber stopper is directly installed onto the connector block by vulcanization-adhesion, it is needed to wash and chemically treat an outer peripheral surface of the connector block before adhering the rubber stopper to the connector block by vulcanization. Further, even after the vulcanization-adhesion step, it is needed to carry out finishing and rust-preventing treatment onto the connector block. Furthermore, many man-hour requirements are needed to complete the finishing operation, because the rubber stopper is directly adhered by vulcanization to the cast connector block whose dimensions are hard to control.

Thus, in both of the aforementioned assembly operations of the rubber stopper, many man-hour requirements are consumed to complete installing the rubber stopper onto the connector block, and result in pushing up the manufacturing cost.

### SUMMARY OF THE INVENTION

The present invention has been developed in view of the problems associated with the conventional hanging-type hydraulic mount. It is therefore an engineering assignment to the present invention to provide a hanging-type hydraulic mount which can diminish the man-hour requirements in the installation of a rubber stopper onto a connector block, and which can reduce the manufacturing cost.

A hanging-type hydraulic mount according to the present invention can achieve the engineering assignment, and comprises:
a tube-shaped first supporter fitting having opposite ends, and a hydraulic chamber formed therein, one of the opposite ends having an opening;
a rod-shaped second supporter fitting disposed coaxially in the first supporter fitting away therefrom by a predetermined interval, and having a leading end and a trailing end, the leading end projecting from the opening of the first supporter fitting;
a rubber-elastic member disposed between the first supporter fitting and the second supporter fitting, and enclosing the hydraulic chamber of the first supporter fitting;
a first bracket to be installed to a mounting member, the first bracket connected to the one of the opposite ends of the first supporter fitting, and having a space therein, the space accommodating the projecting leading end of the second supporter fitting therein;
a second bracket to be installed to another mounting member, being formed by casting, and having a connector block, the connector block connected to the projecting leading end of the second supporter fitting, disposed in the space of the first bracket, and having a predetermined cross-section; and
a rubber stopper installed onto the connector block of the second bracket, and having opposite sides and an assembly opening formed in one of the opposite sides, the assembly opening having a size smaller than the cross-section of the connector block, and expanded elastically to accommodate the connector block therein, thereby enabling the rubber stopper to cover the connector block.

According to the present hanging-type hydraulic mount, the rubber stopper has the assembly opening formed in one of the opposite sides. The assembly opening has a size smaller than the cross-section of the connector block, and is expanded elastically to accommodate the connector block therein, thereby enabling the rubber stopper to cover the connector block. As a result, when installing the rubber stopper onto the connector block, it is possible to obviate the aforementioned various processing operations which have been indispensable conventionally, and to sharply diminish the man-hour requirements for completing the processing operations. All in all, it is possible to reduce the manufacturing cost.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a cross-sectional view of a hanging-type hydraulic mount according to a preferred embodiment of the present invention;
Fig. 2 is a plan view for illustrating how a rubber stopper is installed onto a second bracket in the present hanging-type hydraulic mount;
Fig. 3 is a cross-sectional view taken along arrow "3"-"3" of Fig. 2;
Fig. 4 is a side view for illustrating how the rubber stopper is installed onto the second bracket in the present hanging-type hydraulic mount;
Fig. 5 is a plan view of the rubber stopper in the present hanging-type hydraulic mount;
Fig. 6 is a cross-sectional view taken along arrow "6"-"6" of Fig. 5; and
Fig. 7 is a cross-sectional view taken along arrow "7"-"7" of Fig. 5.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

A hanging-type hydraulic mount of a preferred embodiment according to the present invention will be hereinafter described with reference to the aforementioned drawings.

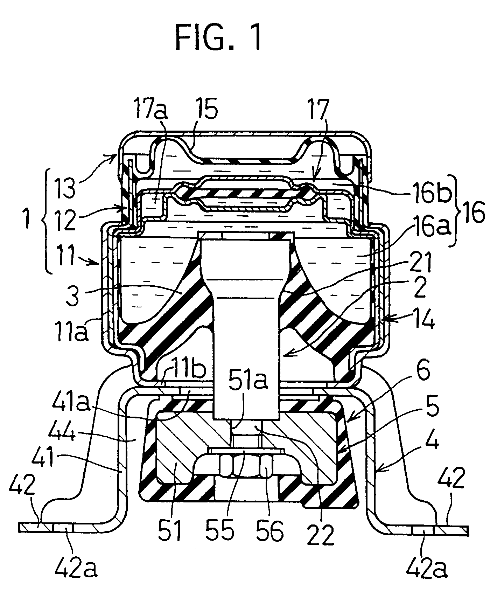

As illustrated in Fig. 1, a hanging-type hydraulic mount of a preferred embodiment according to the present invention includes a tube-shaped first supporter fitting 1, a rod-shaped second supporter fitting 2, a rubber-elastic member 3, a first bracket 4, a second bracket 5, and a rubber stopper 6. The second supporter fitting 2 is disposed coaxially in the first supporter fitting 1 away therefrom by a predetermined interval. The rubber-elastic member 3 is disposed between the first supporter fitting 1 and the second supporter fitting 2, and encloses a hydraulic chamber 16 formed in the first supporter fitting 1. The first bracket 4 is connected to one of the opposite ends of the first supporter fitting 1. The second bracket 5 has a connector block 21 which is connected to a leading-end portion of the second supporter fitting 2. The rubber stopper 6 covers an outer peripheral surface of the connector block 21.

The first supporter fitting 1 includes a cylinder-shaped outer tube fitting 11, an inner tube fitting 12, and a lid-shaped fitting 13. The outer tube fitting 11 has a major-diameter portion 11a, and a flange 11b. The major-diameter portion 11a has a top shoulder and a bottom shoulder at the opposite ends, and is formed substantially at the middle of the first supporter fitting 1 in the axial direction. The flange 11b is formed at the bottom end of the major-diameter portion 11a, and extends inwardly. The inner tube fitting 12 is formed so as to superimpose on the inner peripheral surface of the outer tube fitting 11. The lid-shaped fitting 13 engages with the outer periphery of the inner tube fitting 12, which projects from the top end of the outer tube fitting 11, via the diaphragm 15 described later. Moreover, a cylinder-shaped connector sleeve 14 is fitted into the inner tube fitting 12, and is disposed so as to superimpose on the inner peripheral surface of the major-diameter portion of the inner tube fitting 12.

In the first supporter fitting 1, there is formed a hydraulic chamber 16 in which an incompressible fluid is sealed, and which is closed by a diaphragm 15 and the rubber-elastic member 3 described later. The outer periphery of the diaphragm 15 is held by the top-end portion of the inner tube fitting 12. The hydraulic chamber 15 is divided into a pressure receiving chamber 16a and an equilibrium chamber 16b by a substantially disk-shaped partition member 17. Note that the pressure receiving chamber 16a is disposed on the side of the rubber-elastic member 3, and the equilibrium chamber 16b is disposed on the side of the diaphragm 15. The outer periphery of the disk-shaped partition member 17 is held between the top-end surface of the connector sleeve 14 and the upper shoulder of the inner tube fitting 12. Moreover, in the disk-shaped partition member 17, there is formed an annular orifice passage 17a which communicates the pressure receiving chamber 16a with the equilibrium chamber 16b.

The second supporter fitting 2 is formed as a solid rod shape which is gently tapered at the substantially middle in the axial direction. Namely, it has opposite ends in the axial direction, and a tapered portion 21 disposed at the substantially middle therein. One of the opposite ends is enlarged diametrically, and another one thereof is reduced diametrically. The minor-diameter end of the second supporter fitting 2 is positioned so that the leading-end portion projects from the bottom-end-side opening of the first supporter fitting 1. With the thus projected leading-end portion, the second supporter fitting 2 is disposed in the first supporter fitting 1 away therefrom by a predetermined interval, and coaxially therewith. Moreover, the second supporter fitting 2 is provided with an installation bolt 22 which protrudes outwardly in the axial direction, and which is fixed integrally at the leading end of the minor-diameter portion.

The rubber-elastic member 3 is formed substantially as a hollow truncated cone, and has a minor-diameter end and a major-diameter end. The minor-diameter end is adhered by vulcanization on the outer peripheral surface of the upper end portion of the second supporter fitting 2 which involves the tapered portion 21. The major-diameter end is adhered by vulcanization on the inner peripheral surface of the lower end portion of the connector sleeve 14 which involves the lower shoulder. Thus, the rubber-elastic member 3 encloses the hydraulic chamber 16 on the side of the pressure receiving chamber 16a.

The first bracket 4 is formed by bending a metal plate into a gate-like shape: namely; it has a protruded portion 41 of a substantially inverted letter "U" cross-section at the middle, and installation seats 42, 42 which extend outwardly from the opposite ends of the protruded portion 41, respectively. At the top surface of the protruded portion 41, the first bracket 4 is connected to the flange 11b of the outer tube fitting 11 by welding. Further, in the top surface of the protruded portion 41, there is formed a round hole 41a. The round hole 41a is placed at a position which corresponds to the opening formed inside the flange 11b of the outer tube fitting 11. Furthermore, there is formed a space 44 in the protruded portion 41. The leading-end portion of the second supporter fitting 2 projects into the space 44 via the opening and the round hole 41a. Moreover, there are formed installation holes 42a, 42a in the installation seats 42, 42. Thus, the first bracket 4 is installed to a vehicle body (not shown) by fastening installation bolts, or the like, which are fitted into the installation holes 42a, 42a.

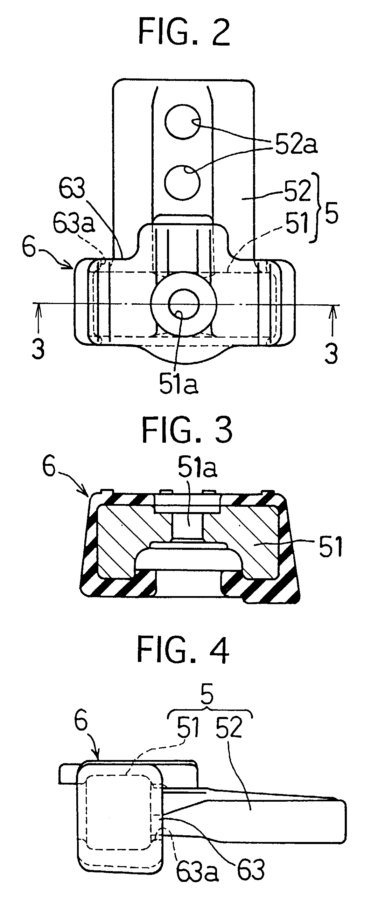

As illustrated in Figs. 2 through 4, the second bracket 5 includes a connector block 51, and a plate-shaped installation seat 52. The connector block 51 is formed as a rectangular parallelepiped, and has a connector hole 51a which is drilled through at the middle. The installation seat 52 extends from one of major-width sides of the connector block 51, and has installation holes 52a, 52a into which installation bolts, or the like, are fitted. The entire second bracket 5 is formed integrally out of these constituent elements by casting. As can be seen from Figs. 2 and 4, at the connection between the connector block 51 and the installation seat 52, the installation seat 52 is formed in a smaller size than that of the connector block 51.

After the connector block 51 is covered by the rubber stopper 6 later described, the second bracket 5 is fixed to the second supporter fitting 2 by fastening: namely; as illustrated in Fig. 1, the installation bolt 22 of the second supporter fitting 2 is fitted into the connector hole 51a of the connector block 51, and is further fitted into a washer 55. Then, a nut 56 is screwed on the installation bolt 22 to fasten the second bracket 5 to the second supporter fitting 2. Thus, the connector block 51 is disposed in the space 44 formed in the protruded portion 41 of the first bracket 4. Moreover, the second bracket 5 is installed to a power unit (not shown) by fastening installation blots which are fitted into the installation holes 52a, 52a of the installation seat 52.

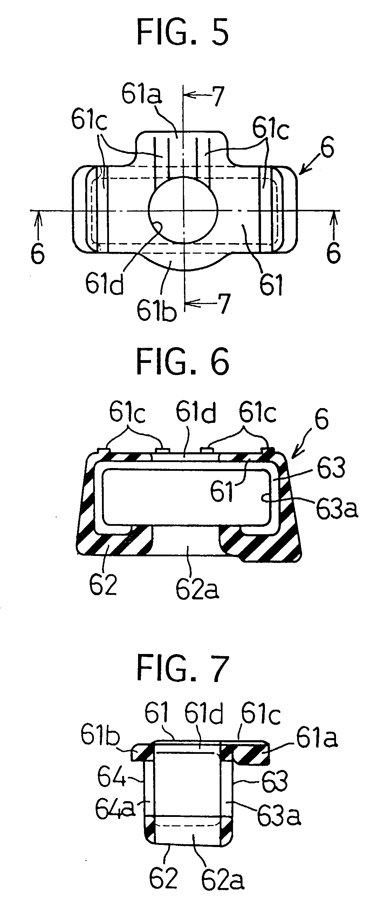

The rubber stopper 6 has a hollow therein. The hollow is formed in a slightly smaller size than the superficial configuration of the connector block 51. Further, the rubber stopper 6 is constituted chiefly by heavy-thickness rubber walls, and is formed independently by vulcanization molding. Furthermore, the rubber stopper 6 has a rectangular-parallelepiped-shaped outer configuration whose size is slightly larger than that of the connector block 51. As illustrated in Figs. 5 through 7, on a top wall 61 of the rubber stopper 6, there are formed a protrusion 61a, a swollen portion 61b, and band-like protrusions 61c. The protrusion 61a sticks out from one of the major-width sides (or from the sides corresponding to the installation seat 52 of the second bracket 5). The swollen portion 61b sticks out from another one the major-width sides. The band-like protrusions 61c stick out from the top wall 61, and extends in the minor-width-wise direction (i.e., from one of the major-width side to another one thereof). Moreover, as illustrated in Fig. 6, at the middle in the top wall 61 and the bottom wall 62 of the rubber stopper 6, there are formed a through hole 61d for receiving the installation bolt 22, and an installation hole 62a for receiving the nut 56. Note that the through hole 61d and the installation hole 62a are placed at a position which corresponds to the connector hole 51a of the connector block 51.

In particular, as best shown in Fig. 7, in a side wall 63 of the rubber stopper 6 which faces the installation seat 52 of the second bracket 5, there is formed an assembly opening 63a. The assembly opening 63a is made by leaving the outer peripheral part of the side wall 63 like a frame, and is formed as a rectangular shape. Note that the rectangular shape has a size which is slightly smaller than the cross-section of the connector block 51, and which is substantially identical with the outer peripheral configuration of the connecting end of the installation seat 52. In addition, on a side wall 64 of the rubber stopper 6 which is disposed opposite to the side wall 63, there is formed another opening 64a whose size is identical with that of the assembly opening 63a. Note that the another opening 64a is provided in order to enable an assembly worker to assemble the connector block 51 either from the side of the side wall 63 or from the side of the side wall 64.

When installing the rubber stopper 6 to the connector block 51 of the second bracket 5, the assembly opening 63a is enlarged elastically. Then, the connector block 51 is fitted into the enlarged assembly opening 63a. Accordingly, the rubber stopper 6 covers the connector block 51. Thus, as illustrated in Figs. 2 through 4, the side wall 63 surrounding the assembly opening 63a restores its original shape elastically, and engages with the outer periphery of the connector block 51. As a result, while exerting a pressing force lightly onto the connector block 51, the rubber stopper 6 is installed closely onto the outer peripheral surfaces of the connector block 5 by the restoring action of the assembly opening 63a.

The thus constructed hanging-type hydraulic mount of a preferred embodiment according to the present invention is installed to a vehicle body (not shown) at the installation seats 42, 42 of the first bracket 4, and is installed to a power unit (not shown) at the installation seat 52 of the second bracket 5. Accordingly, the present hydraulic mount is disposed between the vehicle body and the power unit, thereby supporting the power unit with respect to the vehicle body in a hanging manner as well as a vibration-isolating manner. When the present hydraulic mount is installed, the weight of the power unit is exerted between the first supporter fitting 1 and the second supporter fitting 2. Consequently, the rubber-elastic member 3 is compressed to deform, thereby displacing the second supporter fitting 2 in the axial direction. As the second supporter fitting 2 is displaced downward, the second bracket 5 and the rubber stopper 6 are displaced downward from their positions shown in Fig. 1. As a result, the rubber stopper 6 is separated by a predetermined distance away from the inner periphery of the protruded portion 41 of the first bracket 4.

When vibrations arise between the vehicle body and the power unit, the vibrations can be damped effectively by the actions of the present hydraulic mount: namely; by the elastic deformations of the rubber-elastic member 3, and by the liquid-column resonating action which results from the fluid flowing between the pressure receiving chamber 16a and the equilibrium chamber 16b by way of the orifice passage 17a. Moreover, when vibrations of large amplitude are exerted between the vehicle body and the power unit, the rubber stopper 6 is brought into contact with the inner periphery of the protruded portion 41 of the first bracket 4. Accordingly, displacements of a predetermined value or more can be controlled elastically.

In addition, the rubber stopper 6 is provided with the protrusion 61a, the swollen portion 61b, and the band-like protrusions 61c. When the rubber stopper 6 is brought into contact with the inner periphery of the protruded portion 41 of the first bracket 4, the protrusion 61a, the swollen portion 61b, and the band-like protrusions 61c can relieve the shocks, and can inhibit the abnormal noises from generating. Even when the rubber stopper 6 is obliquely brought into contact with the inner periphery of the protruded portion 41 of the first bracket 4, the protrusion 61a, the swollen portion 61b, and the band-like protrusions 61c can absorb the displacements in the lateral directions. Accordingly, the walls of the rubber stopper 6 can be inhibited from displacing on the connector block 51. As a result, the inner periphery of the rubber stopper 6 can be kept from wearing.

As having described so far, in the hanging-type hydraulic mount of a preferred embodiment of the present invention, the rubber stopper 6, assembled with the connector block 51 of the second bracket 5, has the assembly opening 63a in the side wall 63 (i.e., in one of the opposite side walls). The assembly opening 63a is formed in a size which is slightly smaller than the cross-section of the connector block 51. When the rubber stopper 6 is assembled with the connector block 51, the assembly opening 63a is deformed elastically to expand. The connector block 51 is fitted into the rubber stopper 6 via the expanded assembly opening 63a, and is accordingly covered by the rubber stopper 6. As a result, contrary to the conventional hanging-type hydraulic mounts in which a connector block is press-fitted into a letter U-shaped metal plate with a vulcanization-adhered rubber stopper, or in which a rubber stopper is directly adhered to a connector block by vulcanization, it is unnecessary to carry out the following treatments in the installation of the rubber stopper 6 onto the connector block 51 to complete the present hanging-type hydraulic mount: namely; the washing treatment, the grinding treatment, the adhesive-applying treatment, the chemical treatment, and a plurality of finishing treatments which have been required to complete the conventional hanging-type hydraulic mounts. Hence, according to the present hanging-type hydraulic mount, the man-hour requirements for these treatments can be diminished remarkably, and thereby the manufacturing cost can be reduced sharply.

In the hanging-type hydraulic mount of a preferred embodiment according to the present invention, the assembly opening 63a is formed in the rubber stopper 6 so that it has a rectangular configuration to conform to the cross-section of the rectangular-parallelepiped-shaped connector block 51. Note that, when the connector block 51 has a different configuration, the rubber stopper 6 can be formed so as to have a configuration to conform to the different configuration of the connector block 51 as desired.

Having now fully described the present invention, it will be apparent to one of ordinary skill in the art that many changes and modifications can be made thereto without departing from the spirit or scope of the present invention as set forth herein including the appended claims.

A hanging-type hydraulic mount includes a tube-shaped first supporter fitting, a rod-shaped second supporter fitting disposed in the first supporter fitting, a rubber-elastic member disposed between the first supporter fitting and the second supporter fitting, a first bracket connected to the bottom end of the first supporter fitting, a second bracket having a connector block connected to the leading end of the second supporter fitting, and a rubber stopper installed onto the connector block of the second bracket. The rubber stopper has an assembly opening formed in one of the opposite sides, and having a size smaller than the cross-section of the connector block. The assembly opening is expanded elastically to accommodate the connector block in the rubber stopper. The rubber stopper thus covers the connector block. Hence, when installing the rubber stopper onto the connector block, it is unnecessary to carry out the vulcanization-adhesion, and the pretreatments associated therewith, which have been required conventionally.

## Claims

1. A hanging-type hydraulic mount, comprising:
a tube-shaped first supporter fitting having opposite ends, and a hydraulic chamber formed therein, one of the opposite ends having an opening;
a rod-shaped second supporter fitting disposed coaxially in said first supporter fitting away therefrom by a predetermined interval, and having a leading end and a trailing end, the leading end projecting from the opening of said first supporter fitting;
a rubber-elastic member disposed between said first supporter fitting and said second supporter fitting, and enclosing the hydraulic chamber of said first supporter fitting;
a first bracket to be installed to a mounting member, the first bracket connected to the one of the opposite ends of said first supporter fitting, and having a space therein, the space accommodating the projecting leading end of said second supporter fitting therein;
a second bracket to be installed to another mounting member, being formed by casting, and having a connector block, the connector block connected to the projecting leading end of said second supporter fitting, disposed in the space of said first bracket, and having a predetermined cross-section; and
a rubber stopper installed onto the connector block of said second bracket, and having opposite sides and an assembly opening formed in one of the opposite sides, the assembly opening having a size smaller than the cross-section of the connector block, and expanded elastically to accommodate the connector block therein, thereby enabling the rubber stopper to cover the connector block.

2. The hanging-type hydraulic mount according to Claim 1, wherein said rubber stopper is installed onto the connector block of said second bracket free from adhesion.

3. The hanging-type hydraulic mount according to Claim 1, wherein said rubber stopper has another opening formed in another one of the opposite surfaces, the another opening having a size identical with the assembly opening.

4. The hanging-type hydraulic mount according to Claim 1, wherein said rubber stopper has a hollow for accommodating the connector block of said second bracket therein.

5. The hanging-type hydraulic mount according Claim 1, wherein said rubber stopper has an outer configuration whose size is slightly larger than the cross-section of the connector block of said second bracket.

6. The hanging-type hydraulic mount according to Claim 1, wherein said rubber stopper has a top surface, and a band-like protrusion sticking out from the top surface.

7. The hanging-type hydraulic mount according to Claim 6, wherein said rubber stopper has a plurality of the band-like protrusions.

8. The hanging-type hydraulic mount according to Claim 1, wherein said rubber stopper has a top surface, and a swollen portion sticking out from one of the opposite sides and flush with the top surface.

9. The hanging-type hydraulic mount according to Claim 1, wherein said rubber stopper has a top surface, and a protrusion sticking out from one of the opposite sides and flush with the top surface.

10. The hanging-type hydraulic mount according to Claim 1, wherein said second bracket further has an installation seat for installing said second bracket to the another mounting member, the installation seat connected to the connector block.

11. The hanging-type hydraulic mount according to Claim 10, wherein the connector block is formed as a rectangular parallelepiped having major-width sides and minor-width sides, the installation seat is formed as a rectangular parallelepiped having major-width sides and minor-width sides, and the installation seat is connected to one of the major-width sides of the connector block at one of the minor-width sides.

12. The hanging-type hydraulic mount according to Claim 1, wherein the connector block of said second bracket is connected to the projecting leading end of said second supporter fitting by fastening a bolt and a nut.

13. The hanging-type hydraulic mount according to Claim 12, wherein said rubber stopper has a top wall, a through hole formed in the top wall and receiving the bolt, a bottom wall, and a hole formed in the bottom wall and receiving the nut.

14. The hanging-type hydraulic mount according to Claim 1, wherein said rubber-elastic member is formed as a hollow truncated cone, and has a minor-diameter end and a major-diameter end, the minor-diameter end connected to the trailing end of said second supporter fitting, and the major-diameter end is connected to the one of the opposite ends of said first supporter fitting.

15. The hanging-type hydraulic mount according to Claim 1 further comprising a diaphragm disposed in the hydraulic chamber of said first supporter fitting for enclosing the hydraulic chamber on an opposite side with respect to said rubber-elastic member.

16. The hanging-type hydraulic mount according to Claim 15 further comprising a partition member disposed between said rubber-elastic member and the diaphragm in the hydraulic chamber of said first supporter fitting for dividing the hydraulic chamber into a pressure receiving chamber and an equilibrium chamber, the partition member having an orifice passage communicating the pressure receiving chamber with the equilibrium chamber.
